Europäisches Patentamt

European Patent Office

Office européen des brevets

(11) Numéro de publication: **0 262 054**
**B1**

(12) FASCICULE DE BREVET EUROPEEN

(45) Date de publication du fascicule du brevet:
21.03.90

(51) Int. Cl.⁴: **C02F 11/08**, B01J 31/00

(21) Numéro de dépôt: 87402144.7

(22) Date de dépôt: 25.09.87

(54) Procédé d'oxydation catalytique des phénols.

(30) Priorité: 26.09.86 FR 8613442

(43) Date de publication de la demande:
30.03.88 Bulletin 88/13

(45) Mention de la délivrance du brevet:
21.03.90 Bulletin 90/12

(84) Etats contractants désignés:
AT BE CH DE ES FR GB IT LI LU NL SE

(56) Documents cités:
FR-A- 1 142 880

CHEMICAL ABSTRACTS,
vol. 83, no. 10, 8 septembre 1975, page 415, résumé
no. 85441f, Columbus, Ohio, US; S. MESHITSUKA et al.:
"Reversible oxygen uptake and catalytic ioxidation by
electrochemically reduced sulfonated cobalt
phthalocyanine", & J. CHEM. SOC., CHEM.
COMMUN. 1975, (9), 360-1pidines
Ln4Si2O7N2" "RBON), 355-72 000
CHEMICAL ABSTRACTS, vol. 102, no. 13, 1er
avril 1985, page 638, résumé no. 112650t, Columbus,
Ohio, US; M. FROSTIN-RIO et al.: "Oxidation of phenols
by molecular oxygen catalyzed by transition metal
complexes. Comparison between the activity of various
cobalt and manganese complexes and the role of

(73) Titulaire: L'AIR LIQUIDE, SOCIETE ANONYME POUR
L'ETUDE ET L'EXPLOITATION DES PROCEDES
GEORGES CLAUDE, 75, Quai d'Orsay, F-75321 Paris
Cédex 07(FR)

(72) Inventeur: Ledon, Henri, 31, rue E. Pons,
F-69004 Lyon(FR)
Inventeur: Zumbrunn, Jean-Pierre, Chemin de Savoyères
Haut de Jaylères, F-38640 Claix(FR)
Inventeur: Cocolios, Panayotis, 20, villa de l'Albatros,
F-91470 Limours(FR)
Inventeur: Bron, Pascale, 216, cours de la Libération,
F-38100 Grenoble(FR)
Inventeur: Campo, Philippe, 13, rue de Carnac,
F-78180 Montigny Le Bretonneux(FR)
Inventeur: Berthet, Lucien, 13, allée Rameau,
F-38130 Echirolles(FR)

(74) Mandataire: Sadones Laurent, Renée et al, L'AIR
LIQUIDE 75, quai d'Orsay, F-75321 Paris Cédex 07(FR)

(56) Documents cités: (suite)
peroxy intermediates", & J. CHEM. SOC., PERKIN
TRANS. 1 1984, (9), 1971-9
CHEMICAL ABSTRACTS,
vol. 101, no. 6, 6 août 1984, page 283, résumé no. 42982f,
Columbus, Ohio, US; T.L. RANDALL et al.: "Wet
oxidation of PACT process carbon loaded with toxic
compounds", & PROC. IND. WASTE
CONF. 1983, (Pub. 1984), 38th, 323-38

## Description

La présente invention concerne l'oxydation des phénols, en particulier un procédé d'épuration d'effluents aqueux industriels, par destruction des dérivés phénoliques en solution aqueuse. Selon ce procédé, les phénols sont dégradés par oxydation en des produits ayant perdu le caractère aromatique du polluant et, de ce fait, beaucoup plus facilement biodégradables.

On trouve des eaux résiduaires phénolées dans les effluents d'usines à gaz, de cokeries, d'ateliers de synthèse chimique (fabrication et transformation des phénols), de matières plastiques (phénoplastes) et en général, d'usines travaillant sur la houille, les goudrons et dérivés, les pesticides et colorants. En particulier, l'adoucissage de coupes pétrolières conduit à des effluents aqueux, riches en dérivés phénoliques, difficilement oxydables et qui posent de graves problèmes d'environnement.

Les concentrations en phénols résiduaires sont très variables selon les industries. Elles peuvent atteindre plusieurs grammes par litre. Or, il est connu que les phénols sont toxiques pour les poissons dès 0,1 mg/l. Par ailleurs, dans une eau qui sera rendue potable par addition d'hypochlorite de sodium, une teneur en phénol aussi faible que 0,01 mg/l suffit pour lui donner un goût très désagréable à cause de la formation de chlorophénols ; il est donc nécessaire de traiter ces eaux afin d'en éliminer les phénols.

Jusqu'à ces deux dernières décennies, les procédés d'épuration des eaux phénolées n'étaient pas très nombreux, ni surtout totalement efficaces. Il est donc apparu souhaitable de disposer d'une méthode fiable et économique de destruction des phénols et chlorophénols.

Il est évident qu'un procédé complet d'épuration est recherché depuis longtemps, ainsi que l'attestent de nombreuses publications. Parmi celles-ci, il a été relevé celle ayant trait à l'oxydation des phénols par le couple peroxyde d'hydrogène - sel de fer ferreux, appelé couramment réactif de Fenton, qui agit sur les composés organiques par l'intermédiaire d'un radical HO ° très oxydant. Cette façon de procéder est parmi les plus efficaces. En effet, les épurations sont complètes et relativement rapides. Malheureusement, ce procédé présente des inconvénients, tels que l'obligation d'introduire du fer ferreux qui doit être séparé après traitement, la destruction à pH acide qui provoque l'attaque des infrastructures cimentées sensibles à l'acidité et enfin l'hydroxylation des hydrocarbures pouvant se trouver conjointement aux phénols dans les eaux à épurer. Cet inconvénient s'observe nettement dans le traitement des eaux de raffinerie pétrolière qui peuvent contenir, en plus des phénols, de 5 à 50 p.p.m d'hydrocarbures. Dans ce cas, si l'on emploie les quantités de réactifs juste nécessaires à la destruction des phénols, on observera de façon surprenante une augmentation de la concentration de c: ·ci.

: outre, l'oxygène n'agit que très lentement sur les phénols, et un certain nombre de chercheurs ont étuaié l'oxydation catalysée des phénols par l'oxygène. Ainsi, l'influence de l'ajout de carbonate de sodium sur la réaction d'oxydation de phénols par l'oxygène, en milieu organique, catalysée par des complexes de cobalt, notamment le cobalt (II) bis (salicylidène amino-3 propyl) méthylamine a été décrite par A. Zombeck et al dans "The Journal of the American Chemical Society" volume 103 (1981) pages 7580-7585. Ces auteurs ont observé que la présence d'une base, de préférence le carbonate de sodium, à raison de 5 équivalents molaires par rapport au phénol augmente la durée de vie du catalyseur, et que plus l'additif est basique, plus il est efficace. D'ailleurs, le même effet a été obtenu en présence de pyridine substituée ou d'amines tertiaires greffées sur polystyrènes. Dans une publication ultérieure, B.B. Corden et al "The Journal of the American Society" v olume 107 (1985) pages 2903 à 2907, étudiant l'oxydation, en solution dans le toluène, de dialkyl-2,6 phénols par l'oxygène, catalysée par une série de complexes de cobalt dérivés de bases de Schiff pentadentes, ont signalé que la durée de vie du catalyseur est environ multipliée par 4 en présence d'une base, telle que le carbonate de sodium.

De plus, par S. Meguro, Chemical Abstrats, Vol. 102 (1984) 8424, décrivant la délignification du bois de bouleau par l'oxygène, en présence de bis (salicylidène) éthylène diamine cobalt (II), on apprend que la vitesse de délignification est supérieure en présence d'hydrogeno carbonate de sodium à celle observée en présence de carbonate de sodium ou de soude. De même, les constatations de Mih et Thompson "Journal of Wood Chemistry and Technology" volume 3 (1983), pages 145-159, relatives à l'oxydation de l'hydroxy-4, méthoxy-3 acétophénone par l'oxygène, confirment ce fait.

Il a été trouvé un procédé industriel, reproductible, conduit en milieu homogène, économique, évitant les inconvénients sanitaires et financiers résultant de l'emploi des milieux organiques en quantités importantes, et permettant la destruction totale des dérivés phénoliques en solution aqueuse basique.

Selon ce procédé d'oxydation des phénols par l'oxygène en présence d'ions carbonates, la réaction d'oxygène est conduite en milieu aqueux en présence d'au moins 6 moles de carbonate alcalin par mole de phénol à détruire, sous pression d'oxygène comprise entre 0,1 et 2 mégapascals, à température comprise entre 80 et 200°C, et en présence d'un catalyseur sous forme de sels ou de complexes de métaux de transition avec des ligands polydentes ou monodentes azotés, oxygénés, soufrés, phosphorés tels que phtalocyanines, porphyrines, bis-salicylidène éthylène diamine, mis en oeuvre à raison de 0,1 pour mille à 5 % en poids de métal par poids de phénol, éventuellement déposé sur support.

Le métal de transition peut être choisi parmi le cobalt, le palladium et le cuivre ; et il a été obtenu d'excellents résultats avec un complex sulfoné de cobalt en particulier une phtalocyanine de cobalt sulfonée sous forme sodique ou d'ammonium, les résultats étant comparables dans les deux cas, ou avec de l'acétate de cobalt.

EP 0 262 054 B1

Le cuivre peut être utilisé sous forme de complexe tel que le sel de sodium ou d'ammonium de l'acide bis (salicylidène sulfonate -5) éthylène diamine.

La réaction d'oxydation peut être conduite en système catalytique homogène quand le catalyseur est sous forme de sel ou de complexe métallique. Elle peut aussi être conduite en catalyse hétérogène quand le métal actif ou le complexe actif est déposé sur support tel qu'un silicoaluminate ou du charbon actif.

La quantité utile de catalyseur est de 1 pour mille à 5 % en poids de métal par poids de phénol. Il a été constaté que la quantité de catalyseur peut être faible. Par exemple, on n'observe pas de diminution notable de la vitesse de disparition du phénol en utilisant simplement une concentration de 1 pour mille de catalyseur.

Il a été constaté qu'en présence de catalyseur, la vitesse de disparition du phénol est très nettement supérieure en milieu carbonate de sodium qu'en milieu soude. Dans le premier cas, la réaction est pratiquement totale après seulement une heure de réaction, ce qui constitue un système très efficace de destruction du phénol. Il convient de signaler que les vitesses initiales sont significativement différentes par exemple toutes choses égales par ailleurs (120°C, $PO_2$ = 0,8 MPa, CoPcS 8,5 pour mille en cobalt) le remplacement de la soude par le carbonate de sodium se traduit par une augmentation de x 1,6 de la vitesse initiale. Dans les conditions du procédé, il a été découvert un effet spécifique du carbonate, qui ne peut pas s'expliquer par le rôle protecteur du carbonate vis-à-vis de la dégradation oxydante du catalyseur. Par contre, en milieu hydrogeno carbonate, la réaction est très lente, en accord avec les vitesses observées à pH supérieur ou inférieur au pKa du phénol. Par contre, en milieu carbonate, on n'observe pas de différence de vitesse d'oxydation du phénol ou du phénate de sodium.

La nature du contre-ion semble présenter une certaine importance, puisque les carbonates de calcium et de magnésium ont été trouvés inactifs. Par contre, on obtient des résultats intéressants avec tous les carbonates alcalins, notamment avec les carbonates de sodium, de potassium et de lithium.

La concentration en carbonate alcalin constitue un paramètre important du procédé, il est nécessaire que celle-ci soit au moins égale à six moles par mole de phénol, de préférence il est souhaitable, pour obtenir une destruction rapide, de mettre en oeuvre de 10 à 25 moles de carbonate par mole de phénol.

La solution aqueuse de carbonate alcalin est obtenue par neutralisation d'une solution aqueuse d'hydroxyde alcalin par du dioxyde de carbone.

En outre, il a été observé que l'ajout de pyridine inhibe la réaction d'oxydation.

La réaction d'oxydation est sensible à la pression partielle d'oxygène par exemple, si l'oxygène est remplacé par l'air, la vitesse est réduite. La vitesse initiale est réduite par un facteur d'environ 6 pour une variation de pression partielle de 5.

La température a un effet bénéfique sur la cinétique de la réaction, et il est avatangeux de conduire la réaction d'oxydation à température comprise entre 80 et 200°C, et de préférence entre 100 et 150°C. Le passage de 120 à 130°C se traduit par une augmentation de 65 % de la vitesse initiale de disparition du phénol qui passe de 2, 9 à 4,8 x $10^{-4}$ mol min$^{-1}$.

L'oxydation des chloro- et polychlorophénols, réputée difficile, est également réalisée selon le procédé de l'invention, notamment avec le système phtalocyanine de cobalt sulfonée - carbonate alcalin.

L'ajout de carbonate à un catalyseur complexe de cobalt, de cuivre ou de palladium déposé sur un support conduit à un système très efficace pour la dégradation oxydante de phénols. Ce procédé d'oxydation en milieu aqueux basique peut être valablement appliqué à la destruction des phénols dans tous les types d'effluents aqueux industriels, notamment d'ateliers de synthèse, de l'industrie pétrolière.

Il est donné ci-après des exemples qui illustrent l'invention à titre non limitatif.

EXEMPLE 1 : Oxydation du phénol

On traite une solution aqueuse de phénol, à la concentration de 1 gramme par litre à 120°C dans un autoclave en verre, avec agitation magnétique, sous pression d'oxygène. On prélève régulièrement des échantillons et la concentration de phénol est déterminée par la méthode classique à l'aminoantipyrine et par chromatographie en phase liquide.

Les principaux résultats obtenus en fonction de la présence de divers catalyseurs : phtalocyanine de cobalt sulfonée (CoPcS) ou acétate de cobalt (Co (OAc)2) ajoutés à une concentration de 8,5 pour mille exprimée en atome/gramme d'ion cobalteux par gramme de phénol ; de la présence d'ajouts basiques : hydroxyde de sodium ou carbonate de sodium, dont la concentration est exprimée en mole par mole de phénol, sont consignés dans le tableau I ci-dessous. La pression d'oxygène exprimée en MPa, la conversion du phénol exprimée en pourcentage de phénol converti après une certaine durée de traitement en heure figurent dans le tableau I

**Tableau I**

| Phénol 1 g/litre, température 120°C | | | | | | | |
|---|---|---|---|---|---|---|---|
| Essai | Catalyseur | Ajout | Concentration ajout moles/mole 0 OH | Pression P(02) MP a | Conversion Phénol % | | |
| | | | | | 0,5 h | 1 h | 2 h |
| 1 | – | – | – | 0,8 | – | – | <10 |
| 2 | – | NaOH | 13 moles | 0,8 | – | 32 | 48 |
| 3 | – | $Na_2CO_3$ | 24 moles | 0,8 | 16 | 28 | 50 |
| 4 | Co Pc S | NaOH | 13 moles | 0,8 | 50 | 76 | 89 |
| 5 | Co Pc S | $Na_2CO_3$ | 13 moles | 0,8 | – | 90 | >99,5 |
| 6 | Co Pc S | $Na_2CO_3$ | 24 moles | 0,8 | 70 | 99 | >99,5 |
| 7 | Co Pc S | $Na_2CO_3$ | 24 moles | 0,16 | 7 | 24 | 51 |
| 8 | Co Pc S | $NaHCO_3$ | 24 moles | 0,8 | 6 | 10 | 21 |
| 9 | Co Pc S+py | $Na_2CO_3$ | 24 moles | 0,8 | 13 | 21 | 36 |
| 10 | Co Pc S | $K_2CO_3$ | 24 moles | 0,8 | 52 | 90 | >99,5 |
| 11 | Co Pc S | $Li_2CO_3$ | 24 moles | 0,8 | 50 | 77 | 94 |
| 12 | Co Pc S | $CaCO_3$ | 24 moles | 0,8 | 5 | 6 | 10 |
| 13 | Co Pc S | $Na_2CO_3$ | 6 moles | 0,8 | 50 | 73 | 91 |
| 14 | Co $(OAc)_2$ | $Na_2CO_3$ | 24 moles | 0,8 | – | 94 | >99,5 |

La lecture de ce tableau montre que l'oxydation du phénol en solution aqueuse par l'oxygène est extrêmement lente (essai 1), même à 120°C.

En présence de catalyseur, la vitesse de disparition du phénol est très nettement supérieure en milieu carbonate de sodium (essai 5) qu'en milieu soude (essai 4). L'essai (8) montre qu'en milieu hydrogeno bicarbonate la réaction est très lente.

Les essais (6) et (13) montrent que la concentration en carbonate es t un paramètre important.

La comparaison entre les essais 6 et 7 met en évidence la sensibilité de la réaction d'oxydation à la pression partielle d'oxygène.

Et la comparaison entre l'essai 6 et l'essai 9 qui a été conduit en présence de cinq équivalents molaires de pyridine par ion-gramme de cobalt Co, met en évidence l'effet inhibiteur de l'oxydation du phénol par la pyridine.

EXEMPLE 2 : Oxydation du phénol

Comme dans l'exemple précédent, on traite une solution aqueuse de phénol, à la concentration de 1 gramme par litre, en présence de phtalocyanine de cobalt comme catalyseur, à une concentration de 8,5 pour mille exprimée en atome/gramme d'ion cobalteux par gramme de phénol, et en présence de carbonate de sodium au titre d'ajout basique, à une concentration de 24 moles par mole de phénol. On conduit deux essais à la température de 130°C ; et les résultats sont consignés dans le tableau II

**Tableau II**

| Phénol 1 g/litre, température 130°C | | | | | |
|---|---|---|---|---|---|
| Essai | Ajout | Catalyseur | P($O_2$) | Conversion du Phénol % | |
| | | | | 0,5 h | 1 h |
| 1 | $CO_3Na_2$ | Co Pc S | 0,8 MPa | 96 | >99 |
| 2 | $CO_3Na_2$ | Co Pc S | 0,4 MPa | 88 | 98 |

La lecture de ce tableau met en évidence l'effet favorable de la température sur la vitesse d'oxydation.

EXEMPLE 3 :

Selon l'exemple 1, on traite une solution aqueuse de phénol, à la concentration de 1 gramme par litre, en présence de phtalaocyanine de cobalt comme catalyseur, à une concentration de 1 pour mille exprimée en atome/gramme d'ion cobalteux, et en présence de divers ajouts basiques à une concentration de 13 moles par mole de phénol. On conduit les essais à la température de 100°C, sous une pression d'oxygène de 0,9 méga pascals.
Les résultats obtenus sont consignés dans le tableau III

**Tableau III**

| Phénol 1 g/litre, température 100°C | | | | | |
|---|---|---|---|---|---|
| Essai | Catalyseur | Ajout | Conversion Phénol % | | |
| | | | 1 h | 2 h | 3 h |
| 1 | Co Pc S | NaOH | 15 | 27 | 35 |
| 2 | Co Pc S | CO$_3$HNa | 0 | 3–4 | 7 |
| 3 | Co Pc S | CO$_3$Na$_2$ | 46 | 75 | 97 |

## EXAMPLE 4

Selon l'exemple 1, on traite une solution aqueuse de phénol, à la concentration de 10 grammes par litre, en présence de phtalocyanine de cobalt comme catalyseur, à une concentration de 1 pour mille exprimée en atome/gramme d'ion cobalteux, et en présence d'ajout basique constitué par du carbonate de sodium à une concentration de 6 moles par mole de phénol. Après deux heures de traitement sous une pression d'oxygène de 0,9 MPa à120°C, on observe la conversion de 80 % du phénol.

## EXEMPLE 5 : Oxydation du phénol

Selon les conditions de l'exemple 1, on traite une solution aqueuse contenant 1 g de phénol par litre à 120°C dans un autoclave en verre, sous une pression d'oxygène de 0,8 MPa, en présence de 13 moles d'un ajout basique, et de palladium déposé sur silicoaluminate, à une concentration de 8,5 pour mille de palladium par gramme de phénol.
Les résultats obtenus sont consignés dans le tableau IV.

**Tableau IV**

| Phénol 1 g/litre, température 120°C | | | | | |
|---|---|---|---|---|---|
| Essai | Catalyseur | Ajout | P(O$_2$) MPa | Conversion Ø OH % | |
| | | | | 1 h | 2 h |
| 1 | Pd | CO$_3$Na$_2$ | 0,8 | 58 | 88 |
| 2 | Pd | NaOH | 0,8 | 36 | 52 |

## EXAMPLE 6

Selon les conditions des exemples précédents, on traite une solution aqueuse contenant 1 g par litre de phénol à 120°C, sous une pression d'oxygène de 0,8 MPa, en présence de 12 moles d'un ajout basique et de cuivre complexé avec du sulfosalène à une concentration de 8,5 pour mille de cuivre par gramme de phénol.
Les résultats obtenus sont consignés dans le tableau V

**Tableau V**

| Phénol 1 g/litre, température 120°C | | | | | |
|---|---|---|---|---|---|
| Essai | Catalyseur | Ajout | P(O$_2$) | Conversion Ø OH % | |
| | | | | 1 h | 2 h |
| 1 | Cu sulfosalène | CO$_3$Na$_2$ | 0,8 | 65 | 85 |
| 2 | Cu sulfosalène | NaOH | 0,8 | 26 | 60 |

EXAMPLE 7 : Oxydation de chloro et polychlorophénols

Selon les conditions des exemples précédents, on traite à différentes températures une solution aqueuse contenant 1 g. par litre d'un chloro ou polychlorophénol, en présence de 24 moles de carbonate de sodium par mole de phénol et d'un catalyseur sous forme de phtalocyanine de cobalt sulfonée (CoPcS) à une concentration de 8,5 pour mille (poids)d'ion cobalt par gramme de phénol. Les résultats obtenus figurent das le talbeau VI

Tableau VI

Chloro et polychlorophénol 1 g/litre, $CO_3Na_2$ 24 moles

| Essai | Substrat | Température °C | P($O_2$) MPa | Conversion des phénols % | | |
|---|---|---|---|---|---|---|
| | | | | 1 h | 2 h | 4 h |
| 1 | chloro-2 | 120 | 0,8 | 30 | 59 | 89 |
| 2 | chloro-2 | 130 | 0,8 | 76 | 95 | 99 |
| 3 | dichloro-2,4 | 130 | 0,8 | 35 | 75 | 93 |
| 4 | trichloro-2,4,5 | 130 | 0,77 | 8 | 16 | 32 |
| 5 | trichloro-2,4,5 | 140 | 0,67 | 11 | 21 | 44 |
| 6 | pentachloro | 130 | 0,64 | 5 | 10 | 20 |

EXEMPLE 8 : Oxydation de l'hydroxy-5 quinoléine

Selon les conditions des exemples précédents, on traite une solution aqueuse contenant 3g par litre l'hydroxy-5 quinoléine à 120°C, sous une pr          ession d'oxygène de 0,6 MPa, en présence de 12 moles de carbonate de sodium par mole d'hydroxyquinoléine et d'un catalyseur sous forme de phtalocyanine de cobalt sulfonée (CoPcS) à une concentration de 5 pour mille (poids) d'ion cobalt par gramme de phénol. Après une heure de réaction, on observe par chromatographie haute résolution en phase liquide (colonne : μ -bondapak-phényl solvant $CH_3OH/H_2O$ 30:70 ajusté à pH 2,5 ($H_2SO_4$)) que la conversion de l'hydroxy-5 quinoléine est totale et que le produit majoritaire est l'acide quinolinique (pyridine -2,3 dicarboxylique) qui est isolé après extraction au toluène et recristallisation dans l'eau (F = 188-190°C) avec 91% de rendement.

EXEMPLE 9 : Oxydation d'un mélange d'hydroxy-5 et hydroxy-8 quinoléine

Un mélange réactionnel de l'eau jusqu'à obtention d'une solution contenant hydroxy-5 quinoléine : 7,9g par litre
hydroxy-8 quinoléine : 4,5 par litre.
Le PH est ajusté à 12 par neutralisation de l'hydroxyde alcalin par $CO_2$ gazeux et le catalyseur sous forme de phtalocyanine cobalt sulfonée (CoPcS) est ajouté pour conduire à une concentration de 1 pour mille (poids) d'ion cobalt par gramme d'hydroxyquinoléine. Selon les conditions des exemples précédents, on traite la solution sous une pression d'oxygène de 0,6 MPa, 1 heure à température ambiante (20°C), 2 heures à 60°C, puis 2 heures à 100°C. L'analyse chromatographique effectuée dans les conditions de l'exemple 8 montre la formation d'acide quinolinique avec 45 % de rendement à conversion totale des hydroxyquinoléines.

**Revendications**

1. Procédé d'oxydation catalytique des phénols par l'oxygène en présence d'ions carbonates, caractérisé en ce que la réaction d'oxydation est conduite en milieu aqueux en présence d'au moins 6 moles de carbonate alcalin par mole de phénol à détruire, sous pression d'oxygène comprise entre 0,1 à 2 mégapascals, à température comprise entre 80 et 200°C,et en présence d'un catalyseur sous forme de sels ou de complexes de métaux de transition avec des ligands polydentes ou monodentes azotés, oxygénés, soufrés, phosphorés tels que phtalocyanines, porphyrines, bis-salicylidène éthylène diamine, mis en oeuvre à raison de 0,1 pour mille à 5 % en poids de métal par poids de phénol, éventuellement déposé sur support.

2. Procédé d'oxydation catalytique des phénols par l'oxygène selon la revendication 1, caractérisé en ce que le métal de transition est choisi parmi le cobalt, le palladium et le cuivre.

3. Procédé d'oxydation des phénols par l'oxygène selon la revendication 1 ou 2, caractérisé en ce que la réaction d'oxydation est catalysée par un complexe sulfoné de cobalt, en particulier de phtalocyanine sulfonée ou par un sel de cobalt tel que l'acétate de cobalt.

4. Procédé d'oxydation catalytique des phénols par l'oxygène selon une quelconque des revendications 1 à 3, caractérisé en ce que le catalyseur est mis en oeuvre à raison de 1 pour mille à 1 % en poids de métal par poids de phénol.

5. Procédé d'oxydation catalytique des phénols par l'oxygène selon une quelconque des revendications 1 à 4, caractérisé en ce que le carbonate alcalin est choisi parmi les carbonates de sodium, lithium, potassium.

6. Procédé d'oxydation catalytique des phénols par l'oxygène selon une quelconque des revendications 1 à 5, caractérisé en ce que le carbonate alcalin est mis en oeuvre à raison de 10 à 25 moles par molécule de phénol.

7. Procédé d'oxydation catalytique des phénols par l'oxygène selon une quelconque des revendications 1 à 6, caractérisé en ce que la solution aqueuse de carbonate alcalin est obtenue par neutralisation d'une solution aqueuse d'hydroxyde alcalin par du dioxyde de carbone.

8. Procédé d'oxydation catalytique des phénols par l'oxygène selon une quelconque des revendications 1 à 7, caractérisé en ce que la réaction d'oxydation est conduite à une température comprise entre 100 et 150°C.

9. Procédé d'oxydation catalytique des phénols par l'oxygène, selon une quelconque des revendications 1 à 8, caractérisé en ce que le milieu aqueux contient de 0,0 1 mole à 0,5 mole de phénol par litre.

10. Procédé d'oxydation catalytique des phénols par l'oxygène selon l'une quelconque des revendications 1 à 9, caractérisé en ce que les phénols sont choisis parmi le phénol, les chloro- et polychlorophénols, et les hydroxyquinoléines.

11. Application du procédé d'oxydation catalytique des phénols selon une quelconque des revendications 1 à 10, à l'épuration d'effluents aqueux industriels phénolés provenant d'usines à gaz, de cokeries, d'ateliers de synthèse chimique, de matières plastiques, d'usines travaillant sur la houille, les goudrons et dérivés, les pesticides et colorants, et de l'adoucissage des coupes pétrolières, et à l'oxydation des hydroxyquinoléines en acide quinolinique.

## Patentansprüche

1. Verfahren zur katalytischen Oxydation von Phenolen durch Sauerstoff in Anwesenheit von Carbonationen, dadurch gekennzeichnet, daß die Oxidationsreaktion in wäßrigem Medium in Anwesenheit von wenigstens 6 Mol alkalischem Carbonat je Mol zu zerstörendem Phenol unter einem Sauerstoffdruck zwischen 0,1 und 2 Megapascal und bei einer Temperatur zwischen 80 und 200°C sowie in Anwesenheit eines Katalysators in Form von Übergangsmetallsalzen oder -komplexen mit stickstoffhaltigen, sauerstoffhaltigen, schwefelhaltigen, phosphorhaltigen polydenten oder monodenten Leganden stattfindet, wie z.B. Phthalocyaninen, Porphyrinen, b–Salicylidenäthylendiamin, eingesetzt in einem Verhältnis von 0,1 Gewichtspromille bis 5 Gew.-% Metall je Gewichtseinheit Phenol, eventuell auf Trägermaterial abgelagert.

2. Verfahren zur katalytischen Oxydation von Phenolen durch Sauerstoff nach Anspruch 1, dadurch gekennzeichnet, daß das Übergangsmetall aus Kobalt, Palladium und Kupfer ausgewählt wird.

3. Verfahren zur Oxydation von Phenolen durch Sauerstoff nach Anspruch 1 oder 2, dadurch gekennzeichnet, daß die Oxydationsreaktion durch einen schwefelhaltigen Kobaltkomplex katalysiert wird, insbesondere durch schwefelhaltiges Phthalocyanin oder durch ein Kobaltsalz wie z.B. Kobaltacetat.

4. Verfahren zur katalytischen Oxydation von Phenolen durch Sauerstoff nach einem der Ansprüche 1 bis 3, dadurch gekennzeichnet, daß der Katalysator in einem Verhältnis von 1 Gewichtspromille bis 1 Gew.-% Metall je Gewichtseinheit Phenol eingesetzt wird.

5. Verfahren zur katalytischen Oxydation von Phenolen durch Sauerstoff nach einem der Ansprüche 1 bis 4, dadurch gekennzeichnet, daß das alkalische Carbonat aus den Natrium-, Lithium-, Kaliumcarbonaten ausgewählt wird.

6. Verfahren zur katalytischen Oxydation von Phenolen durch Sauerstoff nach einem der Ansprüche 1 bis 5, dadurch gekennzeichnet, daß das alkalische Carbonat in einem Verhältnis von 10 bis 25 Mol je Molekül Phenol eingesetzt wird.

7. Verfahren zur katalytischen Oxydation von Phenolen durch Sauerstoff nach einem der Ansprüche 1 bis 6, dadurch gekennzeichnet, dass die wäßrige alkalische Carbonatlösung durch Neutralisation einer alkalischen wäßrigen Hydroxidlösung mittels Kohlendioxid erzielt wird.

8. Verfahren zur katalytischen Oxydation von Phenolen durch Sauerstoff nach einem der Ansprüche 1 bis 7, dadurch gekennzeichnet, daß die Oxydationsreaktion bei einer Temperatur zwischen 100 und 150°C stattfindet.

9. Verfahren zur katalytischen Oxydation von Phenolen durch Sauerstoff nach einem der Ansprüche 1 bis 8, dadurch gekennzeichnet, daß das wäßrige Medium 0,01 Mol bis 0,5 Mol Phenol je Liter enthält.

10. Verfahren zur katalytischen Oxydation von Phenolen durch Sauerstoff nach einem der Ansprüche 1 bis 9, dadurch gekennzeichnet, daß die Phenole unter Phenol, Chlor- und Polychlorphenolen sowie Hydroxychinolinen ausgewählt werden.

11. Anwendung des Verfahrens zur katalytischen Oxydation von Phenolen nach einem der Ansprüche 1 bis 10 zur Reinigung phenolhaltiger Industrieabwässer aus Gaswerken, Kokereien, chemischen Synthesebetrieben, Kunststoffabriken, Betrieben, die Steinkohle, Teerprodukte und -derivate, Pestizide und Farbstoffe verarbeiten und aus der Enthärtung von Erdölfraktionen sowie zur Oxydation von Hydroxychinolinen in Chinolinsäure.

## Claims

1. Process for the catalytic oxidation of phenols by oxygen in the presence of carbonate ions, characterised in that the oxidation reaction is conducted in an aqueous medium in the presence of at least 6 moles of alkali carbonate per mole of phenol to be converted, under oxygen pressure of between 0.1 and 2 megapascals, at a temperature of between 80 and 200°C, and in the presence of a catalyst in the form of salts or complexes of transition metals with polyvalent or monovalent nitrogen, oxygen, sulphur or phosphorus containing groups such as phthalocyanins, porphyrins, bis-salicylidene ethylene diamine, utilised in a proportion of between 0.1 per thousand and 5% by weight of metal per weight of phenol, optionally deposited on a support.

2. Process for the catalytic oxidation of phenols by oxygen as claimed in claim 1, characterised in that the transition metal is chosen from cobalt, palladium and copper.

3. Process for the oxidation of phenols by oxygen as claimed in claim 1 or 2, characterised in that the oxidation reaction is catalysed by a sulphonated complex of cobalt, in particular sulphonated phthalocyanin or by a cobalt salt such as cobalt acetate.

4. Process for the catalytic oxidation of phenols by oxygen as claimed in any of claims 1 to 3, characterised in that the catalyst is utilised in a proportion of between 1 per thousand and 1% by weight of metal per weight of phenol.

5. Process for the catalytic oxidation of phenols by oxygen as claimed in any of claims 1 to 4, characterised in that the alkali carbonate is selected from the carbonates of sodium, lithium, potassium.

6. Process for the catalytic oxidation of phenols by oxygen as claimed in any of claims 1 to 5, characterised in that the alkali carbonate is used in a proportion of between 10 and 25 moles per molecule of phenol.

7. Process for the catalytic oxidation of phenols by oxygen as claimed in any of claims 1 to 6, characterised in that the aqueous solution of alkali carbonate is obtained by neutralisation of an aqueous solution of alkali hydroxide by carbon dioxide.

8. Process for the catalytic oxidation of phenols by oxygen as claimed in any of claims 1 to 7, characterised in that the oxidation reaction is conducted at a temperature of between 100 and 150°C.

9. Process for the catalytic oxidation of phenols by oxygen, as claimed in any of claims 1 to 8, characterised in that the aqueous medium contains between 0.01 mole and 0.5 mole of phenol per litre.

10. Process for the catalytic oxidation of phenols by oxygen, as claimed in any of claims 1 to 9, characterised in that the phenols are selected from phenol, chloro- and polychlorophenols, and hydroxyquinolines.

11. Use of the process for the catalytic oxidation of phenols as claimed in any of claims 1 to 10, for the purification of aqueous phenolic industrial effluents coming from gas works, from coking plants, from units for chemical synthesis of plastic materials, from factories working on coal, tars and derivatives, pesticides and dyes, and from the sweetening of oil fractions, and for the oxidation of hydroxyquinolines into quinolinic acid.